# EUROPEAN PATENT SPECIFICATION

(11) **EP 4 144 625 B1**
(45) Date of publication and mention of the grant of the patent: **06.08.2025**
(21) Application number: 21194387.3
(22) Date of filing: 01.09.2021
(51) Int. Cl.: B62K 19/40, B62J 43/13, B62J 43/28, B62K 25/28

(54) **ELECTRIC BICYCLE WITH A BATTERY SLEEVE**
ELEKTRISCHES FAHRRAD MIT BATTERIEHÜLSE
VÉLO ÉLECTRIQUE AVEC PORTE BATTERIE

(43) Date of publication of application: 08.03.2023
(73) Proprietor: SCOTT Sports SA, 1762 Givisiez (CH)
(72) Inventor: MONTAVON, Yann, 1762 Gletterens (CH)
(74) Representative: Keller Schneider Patent- und Markenanwälte AG

(56) References cited:
- CN-U- 213 292 527
- US-A1- 2017 096 190

## Description

### Technical Field

The invention relates to an electric bicycle, comprising a frame with a plurality of frame tubes and a drive battery accommodated in one of the plurality of frame tubes.

### Background Art

The drive battery of an electric bicycle may be arranged at various positions, such as behind the seat tube, below the bicycle rack, in a housing mounted on the down tube or within a frame tube. Compared to other options, accommodating the drive battery in a frame tube has several advantages. In particular, it allows for an esthetic design of the bicycle, and the battery is protected from outside influences without the need for an additional protective housing. If the drive battery is accommodated in the down tube or seat tube, a favourable weight distribution with a low center of gravity may be achieved.

An example is shown in EP 3 590 813 A1 (Winora-Staiger GmbH). The drive unit is accommodated below a frame section connecting the down tube and the seat tube. The down tube accommodates the drive battery and is provided by an insertion opening at its rear end, allowing to insert and remove the drive battery along a straight path after removal of a cover forming a protection element for the frame.

In order to safely accommodate the drive battery within a frame tube, the inner geometry of the frame tube needs to match the outer geometry of the battery or specific battery holders such as holding rails need to be provided within the frame tube. The first option severely limits the designer's freedom with respect to the appearance of the frame tube. Furthermore, manufacturing tolerances of the components, in particular of the frame tube, may complicate the insertion of the battery and/or lead to a wobbling motion of the inserted battery during operation of the bicycle. The second option leads to poor use of the internal space in the frame tube, and the battery may not be held securely in all orientations of the bicycle, e. g. if the bicycle is turned upside down for maintenance purposes.

Document CN213292527U discloses an electric bicycle with all the features of the preamble of independent claim 1

### Summary of the invention

It is the object of the invention to create a solution for securely accommodating the drive battery in a frame tube of an electric bicycle.

The solution of the invention is specified by the features of claim 1. According to the invention, the electric bicycle comprises a sleeve accommodated in the one of the plurality of frame tubes, the sleeve having a shell surface with an outer geometry adapted to an inner geometry of the frame tube, such that a radial position of the sleeve with respect to the frame tube is fixed, and an inner surface adapted to an outer geometry of the drive battery, such that a radial position of the battery with respect to the sleeve is fixed. The drive battery is accommodated in the sleeve.

A typical bicycle frame (diamond frame) features a down tube, a seat tube, a top tube, and a short head tube, where adjacent tubes may be combined into a single element having angled or rounded portions. The invention is applicable as well with other frame types, such as step-through frames, cantilever frames, recumbent frames, etc. as long as there is at least one frame tube which is suitable for accommodating a drive battery. As well, the invention is applicable with a large range of frame tubes, irrespective of their material or manufacturing process.

In addition to the frame, the electric bicycle comprises the usual further components such as the drive motor, the drive train, the wheels, the handlebar, a braking system, a saddle, suspension elements, etc.

The sleeve is an element additional to the frame, that is accommodated in the frame tubes, i. e. in the assembled state it is in a fixed positional relationship with respect to the frame tube. Movements of the sleeve in radial directions, i. e. in all directions perpendicular to a longitudinal axis of the battery accommodation (generally coinciding with the longitudinal axis of the respective frame tube), are prohibited due to the outer geometry of the sleeve and the inner geometry of the frame tube, respectively. In addition, in the assembled state, the sleeve will be fixed against axial movements. This can be due to permanent attachment means or due to selectively engageable and releasable means that may be used for individually locking the sleeve's position or for locking the sleeve's position together with the position of the drive battery accommodated by the sleeve.

The sleeve and the battery are designed in such a way that the battery may be slidably moved into the sleeve and out of the sleeve, when the sleeve is accommodated in the frame tube, along the longitudinal direction of the battery and sleeve, respectively. In a preferred embodiment, the frame tube, the battery and the sleeve all have the geometry of right prisms, i. e. the sleeve may be first inserted into the frame tube along a straight line (and potentially fixed to the frame tube thereafter) and in a subsequent step the battery may be inserted into the sleeve along a straight line as well. Nevertheless, in principle, the invention is applicable as well with arcuate frame tubes and accordingly arcuate sleeves and batteries.

The sleeve may be manufactured from different materials. It is particularly preferred to use a thermoplastic resin, which may be fiber reinforced and/or cross-linked. The handling properties for inserting or removing the battery may be improved if the material of the sleeve or of a coating provided on the inner surface of the sleeve is chosen to facilitate the sliding motion of the battery.

It has to be noted that the electric bicycle may feature more than one drive battery, the batteries being accommodated in the same or different frame tubes as well as in the same sleeve or different sleeves. The invention may be applied to all the frame tubes accommodating batteries or just some of them.

The sleeve, matching the inner geometry of the frame tube and matching the outer geometry of the battery, provides an interface between the battery and the frame tube. It helps to compensate manufacturing tolerances, improves the support of the battery within the frame tube and/or facilitates the insertion and removal of the battery. Furthermore, the same battery type, having a given geometry, may be accommodated within frame tubes having different geometries.

Preferably, the sleeve substantially encloses a shell surface of the drive battery. This means that the battery is surrounded by the sleeve along substantially its entire circumference and along substantially its entire length.

This ensures that the drive battery is supported against radial movements in all possible directions, irrespective of the orientation of the bicycle (e. g. upside down for assembly and maintenance) and of forces acting on the bicycle and its components. Forces acting between the battery and the frame are evenly distributed.

In particular, rotation of the battery within the sleeve and rotation of the sleeve within the frame are prohibited by the cross-sectional geometry of the components being non-rotationally symmetric.

In a preferred embodiment, the sleeve comprises an enclosing shell and a plurality of rib-like protrusions on an outer surface of the enclosing shell. This means that the geometry of the shell is adapted to the geometry of the drive battery, whereas the rib-like protrusions ensure that the outer geometry of the sleeve matches the inner geometry of the frame tube. Using rib-like protrusions minimizes the amount of material used for the sleeve and provides defined contact areas between the sleeve and the frame tube.

In particular, the shell and the protrusions have a constant cross-sectional geometry along the length of the sleeve.

The shell and the protrusions may be arranged in such a way that the inner surface of the frame tube features first regions that are contacted by the protrusions, second regions that are directly contacted by protrusion-less regions of the shell and third regions that are not in contact with the sleeve. In other embodiments, contact between the sleeve and the frame tube is effected exclusively by protrusions.

Preferably, a wall thickness of the enclosing shell is substantially constant. This allows for a simple geometry, minimizing sleeve weight and use of cross-sectional volume.

As an alternative to the described "inner shell + ribs" embodiment, the shell may form the contact surface to the frame tube and the rib-like protrusions are directed to the battery ("outer shell + ribs"). In a further alternative, the sleeve features an inner shell as well as an outer shell, being connected by ribs ("inner shell / ribs / outer shell"). In yet further alternative embodiments, no rib-like protrusions are used. In such cases, the wall thickness of the shell or of the sleeve, respectively, may vary along the circumference. Advantageously, the one of the plurality of frame tubes is the down tube, the down tube comprising an access opening at an end thereof, in particular at the rear end, and the opening being arranged in such a way that the drive battery is removable from the down tube along a straight removal path.

Accommodating the battery in the down tube leads to an advantageous weight distribution. Furthermore, considering the desired optics and handling properties of the bicycle, the down tube usually allows for accommodating bigger (and therefore higher capacity) batteries than other frame tubes. Inserting and removing the battery along the longitudinal extension of the tube allows for an optimum use of the inner volume of the frame tube, and lateral battery access openings that could weaken the structure of the frame tube are avoided.

According to the invention, the sleeve integrates at least one cable duct.

Electric bicycles usually feature a number of electrical, mechanical and/or hydraulic cables or lines. Some of those extend from the handlebar to a central or rear part of the bicycle. Usually, it is the best option to route these cables or lines along a frame tube, in particular within the down tube. However, if the drive battery shall be accommodated within the same frame tube, a solution has to be provided for cable/line routing.

The cable duct may be provided by a unitary portion of the sleeve or by additional elements attached to the sleeve.

Advantageously, the at least one cable duct is defined by at least one of the plurality of rib-like protrusions. Accordingly, the design is simplified and volume available between adjacent ribs may be used for guiding the cables or lines, avoiding further space requirement for the routing of these components.

Preferably, the cable duct comprises an accommodation structure provided at the sleeve and an additional duct element for accommodating at least two cables, wherein the duct element is adapted to be inserted into the accommodation structure. This allows for assembling the at least two cables and the duct element in a first step. In a second step, the assembled cables and duct element are inserted into the accommodation structure.

Preferably, in the assembled state the duct element is accommodated between the outer surface of the sleeve and the inner surface of the frame tube. This enables the introduction of the duct element, in particular the duct element assembled with the cables and/or lines, prior to, simultaneously with as well as after the insertion of the sleeve into the frame tube, thus facilitating assembly and maintenance operations. If the cables and/or lines are inserted into the frame tube prior to the sleeve (and the battery), the duct element protects them from damages.

Preferably, the duct element is fully openable along its length for cable insertion and removal. Again, this facilitates assembly and maintenance operations.

For providing this function, a hinge may extend along the length of the duct element, allowing for swivelling up a portion of the duct element's shell. Alternatively, the duct element is made from an elastic material and features a slit extending along the length of the duct element, allowing for opening the slit by bending back a part of the shell until the slit is opened. A hook structure may be foreseen for mutually locking the two parts adjacent to the slit in the closed configuration.

In a preferred embodiment, the sleeve is attached to the frame tube by a screw connection, in particular the sleeve is attached to the frame tube by a first screw connection in a rear region of the sleeve and by a second screw connection in a front region of the sleeve.

In particular, the front region and the rear region of the sleeve comprise the outer 25% of the length of the sleeve. Screws of the screw connection may directly interact with the sleeve or with attachment elements interacting with the sleeve. In principle, the attachment elements may be arranged partially or completely offset from the sleeve in an axial direction as their primary purpose is to provide a stop to the sleeve against axial movements.

Preferably, an electric contacting device is attached to an end region of the sleeve. Attaching the contacting device to the sleeve allows for pre-assembly, before the sleeve is eventually inserted into the frame tube, thus facilitating assembly of the bicycle.

Preferably, a mechanical locking device is attached to an end region of the sleeve. Again, this allows for pre-assembly. In particular, the mechanical locking device comprises manual means accessible by the insertion opening for the battery, for manually locking and unlocking of the locking device.

In addition, the electric contacting device and/or the mechanical locking device may be employed to mechanically connect the sleeve to the frame tube.

In a preferred embodiment, the electric contacting device is attached to a first end region of the sleeve and the mechanical locking device is attached to a second end region of the sleeve, opposite the first end region.

In cases where the battery is accommodated by the down tube, it is particularly preferred to have an arrangement where the electric contacting device is arranged at the front end of the sleeve, and the mechanical locking device is attached at the rear end of the sleeve, where the insertion opening for the battery is located as well.

Other advantageous embodiments and combinations of features come out from the detailed description below and the entirety of the claims.

### Brief description of the drawings

The drawings used to explain the embodiments show:
- Fig. 1: an oblique view of a frame for an electric bicycle according to an embodiment of the invention;
- Fig. 2: a partial cross-sectional side view of the frame;
- Fig. 3: a partially transparent oblique view of a section of the down tube accommodating the sleeve and the drive battery being inserted into the sleeve;
- Fig. 4: a partially transparent oblique view showing the attachment of the sleeve to the down tube;
- Fig. 5: an oblique view of the sleeve and of the cable ducts;
- Fig. 6: a back view of the sleeve and the cable ducts;
- Fig. 7: a cross-sectional view of the frame, the sleeve, the cable ducts and the drive battery;
- Fig. 8: an oblique view of the front end of the sleeve with the electric connector assembly;
- Fig. 9: a view showing the attachment of the electric connector assembly to the sleeve; and
- Fig. 10: an oblique view of the back end of the sleeve with the mechanical locking assembly.

In the figures, the same components are given the same reference symbols.

### Preferred embodiments

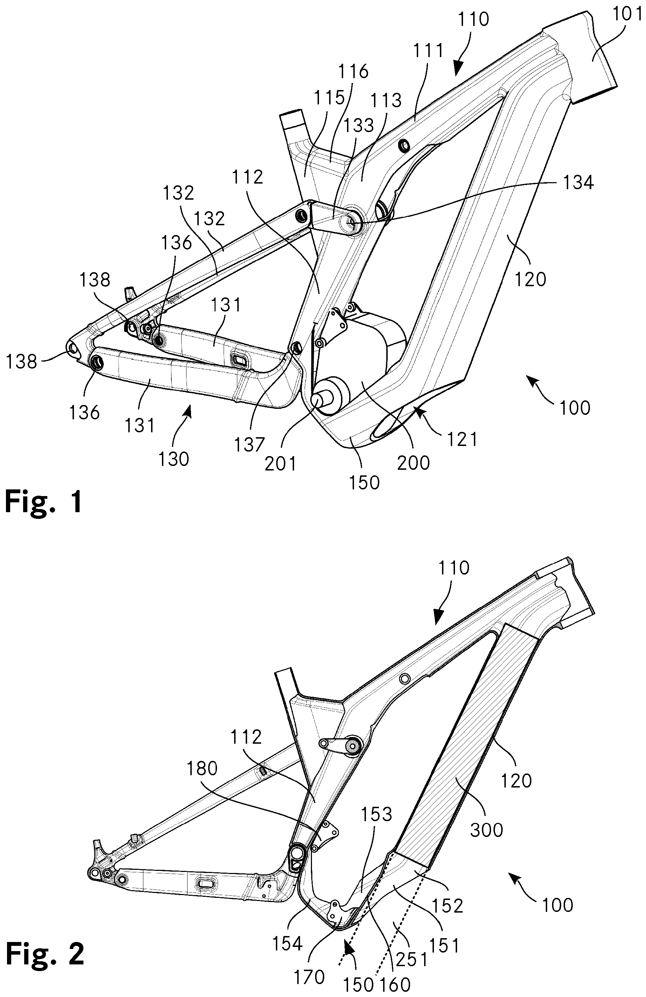

The Figure 1 is an oblique view of a frame for an electric bicycle according to an embodiment of the invention. The frame 100 comprises a head tube 101 for receiving a front wheel fork, the head tube 101 being connected to a top tube 110 and a down tube 120. The top tube 110 has a front part 111 and a rear part 112 connected to the front part 111 by a bend 113. An angle between the front part 111 and the rear part 112 is about 30°. The rear part 112 of the top tube 110 is connected to a rear end of a frame section 150, the front end of which connected to the rear end of the down tube 120. An angle enclosed by the front part 111 of the top tube 110 and the down tube 120 is about 30°, a further angle between the down tube 120 and the front part of the frame section 150 is about 30° as well. The down tube 120 and the rear part 112 of the top tube 110 are approximately parallel to each other.

The frame further comprises a swing arm assembly 130 for supporting the rear wheel axle bearing 138. The swing arm assembly 130 features two lower swing arms 131 and two upper swing arms 132 connected to the upper swing arms 131 by pivots 136, wherein the rear wheel axle bearing 138 is arranged at a rear end of the upper swing arms 132. Further pivots 137 are arranged between the lower swing arms 131 and a lower end region of the rear part 112 of the top tube 110. The front ends of the upper swing arms 132 are each connected to a link 133, wherein the front ends of the links 133 are fixed to a transmission axle 134 supported in the rear part 112 of the top tube 110, slightly below the bend 113. The suspension further comprises a spring/damper element housed within the rear part 112 of the top tube 110. The specifics of such a spring/damper arrangement and its interaction with the swing arm assembly are described in the International Patent Application WO 2015/051472 A1 (Flow AG).

A saddle tube 115 is attached to an outside of a middle section of the rear part 112 of the top tube 110, a support 116 linking the saddle tube 115 to the bend 113 of the top tube 110. The saddle tube 115 is designed to receive a seat post supporting a saddle of the bicycle.

A drive unit 200 comprising an elongated housing accommodating a motor, a motor control unit, a crank axle 201 for mounting a crankset and a transmission from the motor to the crank axle 201, is accommodated in an aperture located between the top tube 110, the down tube 120 and the frame section 150. Such drive units are commercially available, and the invention may applied to several of such drive units. Therefore, it is not necessary to describe the drive unit in more detail.

The Figure 2 is a partial cross-sectional side view of the frame, without the drive unit. In addition to the components seen in Figures 1 and 2, the sleeve 300, accommodated within the down tube 120 is schematically displayed. The sleeve 300 has an elongated prismatic geometry, the outer shape matching the geometry of the accommodation in the down tube 120 as described in more detail below.

The frame section 150 linking the rear end of the down tube 120 to the lower end of the top tube 110 comprises two lateral skirts 151 extending along the entire frame section 150 as well as a base plate 160 (cf. Figure 2), as well extending along the entire frame section 150. The skirts 151 and the base plate 160 are U-shaped in the main plane of the frame shown in Figure 1. At its front end, the base plate 160 is connected to an inner side of the down tube 120 (i. e. facing the frame aperture). Starting from there, it runs to the outside of the frame (i. e. to the side facing away from the frame aperture), reaching the outside close to the lowest point of the frame and further running along the outside of the frame until the top tube 110 is reached. At a front region 152 of the frame section 150, the two skirts 151 are situated below the base plate 160, delimiting an insertion and removal path 251 for the sleeve 300 and the battery, together with the outer surface of the base plate 160. In a central region 153 of the frame section 150 the skirts 151 extend to both sides of the base plate 160, and in a rear region 154 of the frame section 150 the skirts 151 are situated above the base plate 160 forming an accommodation for the drive unit 200, together with the inside surface of the base plate 160 (cf. Figure 1).

A first mounting bracket 170 is attached to the inner surface of the base plate 160 in a location close to the lowest point of the frame section 150. Two second mounting brackets 180 are attached to the rear part 112 of the top tube 110.

The down tube 120 features an opening 121 at its rear end (cf. also Fig. 1). When the battery is removed or fully inserted it may be closed by a suitable cover in a manner known as such, to protect the inside of the down tube 120 and the battery against negative impact from dirt, moisture, etc.

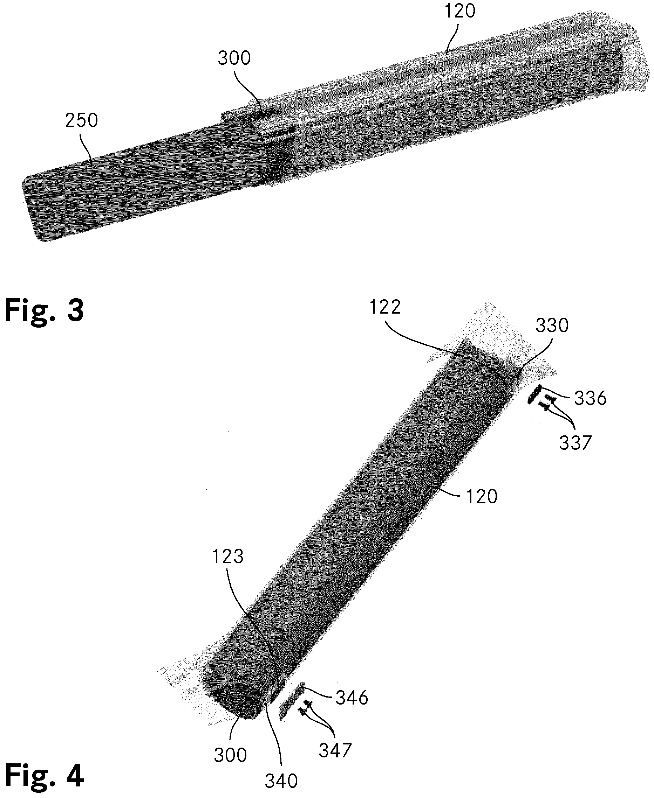

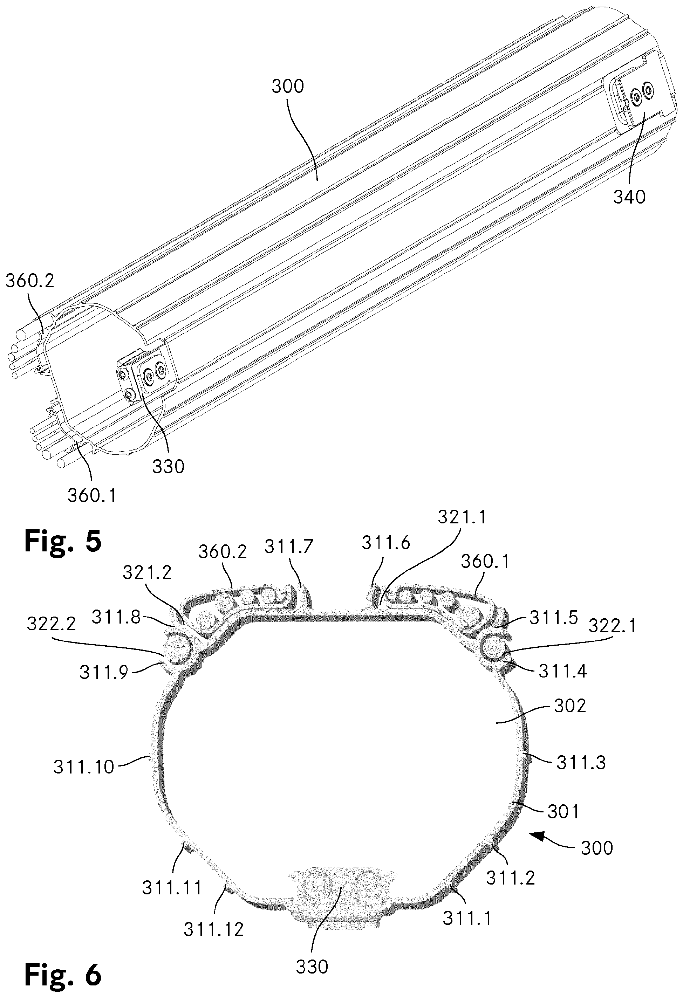

The Figure 3 is a partially transparent oblique view of a section of the down tube accommodating the sleeve and the drive battery being inserted into the sleeve. The Figure 4 is a partially transparent oblique view showing the attachment of the sleeve to the down tube. The sleeve 300 is fully inserted into the down tube 120 and attached thereto. For this purpose, a front fastener 330 and a rear fastener 340 are attached to the sleeve 300 at the front and rear end thereof, respectively (see also Figure 5). The fasteners 330, 340 each feature two screw holes that are flush with through holes 122, 123 in the down tube 120 in the fully inserted position of the sleeve 300. The through holes 122, 123 are provided in the outer region of the shell of the down tube 120 pointing away from the center of the bicycle frame. The sleeve 300 is attached to the frame tube 120 by means of screws 337, 347, running through through holes in a front plate 336 and rear plate 346 respectively, as well as the through holes 122, 123 of the down tube 120 and cooperating with inner threads of the screw holes of the fasteners 330, 340.

The drive battery 250 is slidably inserted into and removed from the sleeve 300.

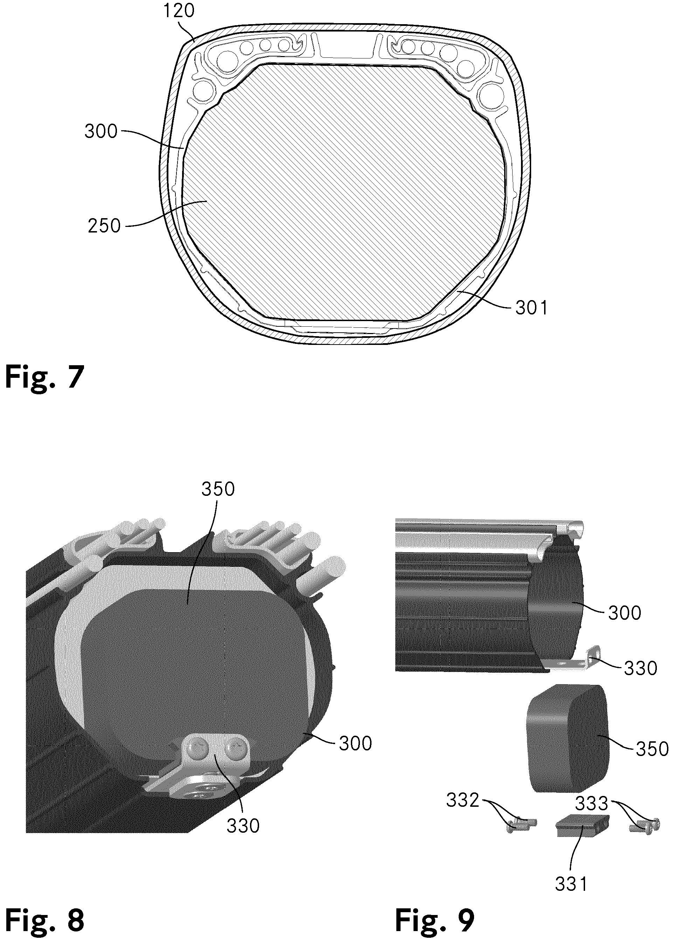

The Figure 5 is an oblique view and the Figure 6 is a back view of the sleeve and of the cable ducts. The Figure 7 is a cross-sectional view of the frame, the sleeve, the cable ducts and the drive battery. The sleeve 300 is prismatic and has a generally rounded cross-sectional shape, which is symmetric with respect to a central axis (running vertically in Figure 6). The sleeve 300 features a shell 301 fully enclosing an accommodation volume 302 for the drive battery. The thickness of the shell 301 is substantially constant along the entire circumference. On the outside, a number of ribs 311.1...12 are provided. Some of the ribs 311.1, 311.2, 311.3, 311.10, 311.11, 311.12 are short straight protrusions with a rounded shape at their outer free end. Further ribs 311.4, 311.6, 311.7, 311.9 have an arcuate shape. Together with Y-shaped ribs 311.5, 311.8 they define two accommodations 321.1, 321.2 as well as two cable ducts 322.1, 322.2. Each of the accommodations accommodates a duct element 360.1, 360.2 for housing cables and lines. The duct elements 360.1, 360.2 are formed from an elastic material and feature a longitudinal slit as well as hook structures neighbouring the slit. This allows for opening the respective duct element 360.1, 360.2 for the insertion or removal of cables or lines and for subsequently securely closing the duct element 360.1, 360.2. The outer geometry of the duct elements 360.1, 360.2 is chosen in such a way that in a closed state of the respective element it recedes between the neighbouring ribs 311.5, 311.6; 311.7, 311.8.

Some of the cables or lines are housed in the duct elements 360.1, 360.2, wherein the duct elements with the cables may be inserted into the frame tube prior to the insertion of the sleeve as well as together with the insertion of the sleeve or subsequently. Further cables or lines are directly accommodated in the cable ducts 322.1, 322.2.

The enveloping surface of the sleeve 300, defined by the shell 301 and in particular by the ribs 311.1...12 corresponds to the inner geometry of the down tube 120. The outer geometry of the drive battery 250 matches the inner geometry of the shell 301 of the sleeve 300. Accordingly, the sleeve 300 and the drive battery 250 are held in the down tube 120 in such a way that radial movements as well as any rotational movements are prohibited.

The Figure 8 is an oblique view of the front end of the sleeve with the electric connector assembly, the Figure 9 shows the attachment of the electric connector assembly to the sleeve. Electric connector assemblies are commercially available. Accordingly, no detailed description is required and the respective electric connector assembly 350 is displayed in the Figures in a simplified way. It serves as a stop element for the drive battery and features spring loaded members exerting a rearward force onto the drive battery if it is fully inserted into the down tube. The electric connector assembly 350 is attached to the sleeve 300 prior to inserting the sleeve into the frame tube. For doing so, a bracket 331 is slid in a groove of the assembly 350 and affixed with two screws 332. In a next step, the assembly 350 is placed on the front fastener 330. Finally, the assembly 350 is attached to the fastener 330 and thus to the sleeve by means of two further screws 333 running axially through through holes of the fastener 330 and cooperating with screw holes in the bracket 331. The outer shape of the electric connector assembly 350 matches the inner shape of the sleeve 300, accordingly, the front opening of the sleeve 300 is substantially closed by the electric connector assembly 350.

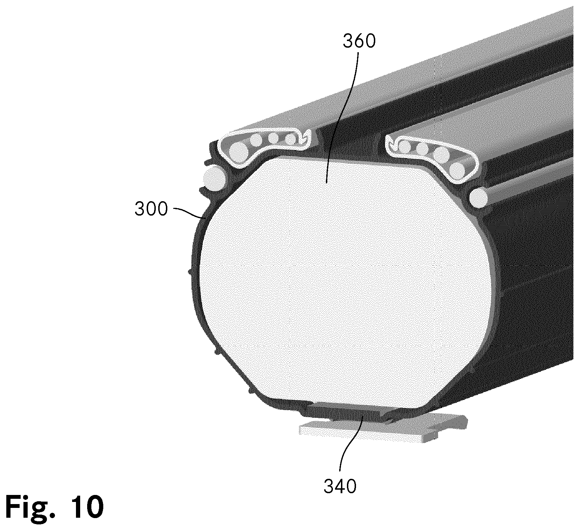

The Figure 10 is an oblique view of the back end of the sleeve with the mechanical locking assembly. Mechanical locking assemblies are commercially available. Accordingly, no detailed description is required and the mechanical locking assembly 360 is displayed in the Figure in a simplified way. It is attached to the sleeve 300 at its rear end, using the rear fastener 340. It generally features a cover which may be opened and closed in order to insert or remove the drive battery into or from the sleeve 300 by a linear straight sliding motion. It further features operating means for manually locking and unlocking the cover 360. In the closed position, the battery is securely held between the mechanical locking assembly 360 and the spring loaded members of the electric connector assembly. Furthermore, a lock may be provided for safely locking the battery within the down tube 120.

The invention is not restricted to the embodiments described above. In particular, the invention is applicable to electric bicycles having different frame geometries and rear wheel suspension arrangements. The specific geometry of the frame tube, the sleeve and the battery may be different. As well, the electric connector assembly and/or the mechanical locking assembly may be designed differently.

In summary, it is to be noted that the invention creates a solution for securely accommodating the drive battery in a frame tube of an electric bicycle.

## Claims

1. Electric bicycle, comprising
a) a frame with a plurality of frame tubes;
b) a drive battery accommodated in one of the plurality of frame tubes;
c) a sleeve accommodated in the one of the plurality of frame tubes, the sleeve having a shell surface with an outer geometry adapted to an inner geometry of the frame tube, such that a radial position of the sleeve with respect to the frame tube is fixed, and an inner surface adapted to an outer geometry of the drive battery, such that a radial position of the battery with respect to the sleeve is fixed; and
d) the drive battery being accommodated in the sleeve;
**characterized in that**
e) the sleeve integrates at least one cable duct.

2. Electric bicycle as recited in claim 1, **characterized in that** the sleeve substantially encloses a shell surface of the drive battery.

3. Electric bicycle as recited in claim 2, **characterized in that** the sleeve comprises an enclosing shell and a plurality of rib-like protrusions on an outer surface of the enclosing shell.

4. Electric bicycle as recited in claim 3, **characterized in that** a wall thickness of the enclosing shell is substantially constant.

5. Electric bicycle as recited in any of claims 1 to 4, **characterized in that** the one of the plurality of frame tubes is the down tube, the down tube comprising an access opening at an end thereof, in particular at the rear end, the opening being arranged in such a way that the drive battery is removable from the down tube along a straight removal path.

6. Electric bicycle as recited in claims 1 and 3, **characterized in that** the at least one cable duct is defined by at least one of the plurality of rib-like protrusions.

7. Electric bicycle as recited in claim 1 or 6, **characterized in that** the cable duct comprises an accommodation structure provided at the sleeve and a duct element for accommodating at least two cables to be inserted into the accommodation structure.

8. Electric bicycle as recited in claim 7, **characterized in that** the duct element is accommodated between the outer surface of the sleeve and the inner surface of the frame tube in the assembled state.

9. Electric bicycle as recited in claim 7 or 8, **characterized in that** the duct element is fully openable along its length for cable insertion and removal.

10. Electric bicycle as recited in any of claims 1 to 9, **characterized in that** the sleeve is attached to the frame tube by a screw connection, in particular that the sleeve is attached to the frame tube by a first screw connection in a rear region of the sleeve and by a second screw connection in a front region of the sleeve.

11. Electric bicycle as recited in any of claims 1 to 10, **characterized in that** an electric contacting device is attached to an end region of the sleeve.

12. Electric bicycle as recited in any of claims 1 to 11, **characterized in that** a mechanical locking device is attached to an end region of the sleeve.

13. Electric bicycle as recited in claims 11 and 12, **characterized in that** the electric contacting device is attached to a first end region of the sleeve and that the mechanical locking device is attached to a second end region of the sleeve, opposite the first end region.

## Patentansprüche

1. Elektrofahrrad, umfassend
a) einen Rahmen mit einer Vielzahl von Rahmenrohren;
b) eine Antriebsbatterie, die in einem der Vielzahl von Rahmenrohren untergebracht ist;
c) eine Hülse, die in dem einen der Vielzahl von Rahmenrohren untergebracht ist, wobei die Hülse eine Mantelfläche mit einer Außengeometrie aufweist, die an eine Innengeometrie des Rahmenrohrs angepasst ist, so dass eine radiale Position der Hülse in Bezug auf das Rahmenrohr fixiert ist, und eine Innenfläche, die an eine Außengeometrie der Antriebsbatterie angepasst ist, so dass eine radiale Position der Batterie in Bezug auf die Hülse fixiert ist; und
d) wobei die Antriebsbatterie in der Hülse untergebracht ist;
**dadurch gekennzeichnet, dass**
e) die Hülse mindestens einen Kabelkanal aufweist.

2. Elektrofahrrad nach Anspruch 1, **dadurch gekennzeichnet, dass** die Hülse eine Mantelfläche der Antriebsbatterie im Wesentlichen umschließt.

3. Elektrofahrrad nach Anspruch 2, **dadurch gekennzeichnet, dass** die Hülse eine umschließende Schale und eine Vielzahl von rippenartigen Vorsprüngen auf einer Außenfläche der umschließenden Schale umfasst.

4. Elektrofahrrad nach Anspruch 3, **dadurch gekennzeichnet, dass** eine Wandstärke der umschließenden Schale im Wesentlichen konstant ist.

5. Elektrofahrrad nach einem der Ansprüche 1 bis 4, **dadurch gekennzeichnet, dass** das eine der Vielzahl von Rahmenrohren das Unterrohr ist, wobei das Unterrohr eine Zugangsöffnung an einem Ende davon aufweist, insbesondere an dem hinteren Ende, wobei die Öffnung derart angeordnet ist, dass die Antriebsbatterie entlang eines geraden Entfernungswegs von dem Unterrohr entfernbar ist.

6. Elektrofahrrad nach Anspruch 1 und 3, **dadurch gekennzeichnet, dass** der mindestens eine Kabelkanal durch mindestens einen der Vielzahl von rippenartigen Vorsprüngen definiert ist.

7. Elektrofahrrad nach Anspruch 1 oder 6, **dadurch gekennzeichnet, dass** der Kabelkanal eine Aufnahmestruktur, die an der Hülse bereitgestellt ist, und ein Kanalelement zum Aufnehmen von mindestens zwei Kabeln, die in die Aufnahmestruktur einzuführen sind, umfasst.

8. Elektrofahrrad nach Anspruch 7, **dadurch gekennzeichnet, dass** das Kanalelement im zusammengebauten Zustand zwischen der Außenfläche der Hülse und der Innenfläche des Rahmenrohrs untergebracht ist.

9. Elektrofahrrad nach Anspruch 7 oder 8, **dadurch gekennzeichnet, dass** das Kanalelement entlang seiner Länge zum Einführen und Entfernen des Kabels vollständig geöffnet werden kann.

10. Elektrofahrrad nach einem der Ansprüche 1 bis 9, **dadurch gekennzeichnet, dass** die Hülse durch eine Schraubverbindung an dem Rahmenrohr befestigt ist, wobei insbesondere die Hülse durch eine erste Schraubverbindung in einem hinteren Bereich der Hülse und durch eine zweite Schraubverbindung in einem vorderen Bereich der Hülse an dem Rahmenrohr befestigt ist.

11. Elektrofahrrad nach einem der Ansprüche 1 bis 10, **dadurch gekennzeichnet, dass** eine elektrische Kontaktvorrichtung an einem Endbereich der Hülse befestigt ist.

12. Elektrofahrrad nach einem der Ansprüche 1 bis 11, **dadurch gekennzeichnet, dass** eine mechanische Verriegelungsvorrichtung an einem Endbereich der Hülse befestigt ist.

13. Elektrofahrrad nach Anspruch 11 und 12, **dadurch gekennzeichnet, dass** die elektrische Kontaktvorrichtung an einem ersten Endbereich der Hülse befestigt ist und dass die mechanische Verriegelungsvorrichtung an einem dem ersten Endbereich gegenüberliegenden zweiten Endbereich der Hülse befestigt ist.

## Revendications

1. Vélo électrique, comprenant
a) un châssis avec une pluralité de tubes de châssis ;
b) une batterie d'entraînement renfermée dans un des tubes ;
c) un manchon renfermé dans un des tubes, le manchon présentant une surface de coque avec une géométrie extérieure adaptée à une géométrie intérieure du tube de châssis, de sorte qu'une position radiale du manchon par rapport au tube de châssis soit fixe et une surface intérieure adaptée à une géométrie extérieure de la batterie d'entraînement, de sorte qu'une position radiale de la batterie par rapport au manchon soit fixe ; et
d) la batterie d'entraînement étant renfermée dans le manchon ;
**caractérisé en ce que**
e) le manchon intègre au moins un conduit de câbles.

2. Vélo électrique selon la revendication 1, **caractérisé en ce que** le manchon entoure sensiblement une surface de coque de la batterie d'entraînement.

3. Vélo électrique selon la revendication 2, **caractérisé en ce que** le manchon comprend une coque et une pluralité de protubérances en forme de nervures sur une surface extérieure de la coque.

4. Vélo électrique selon la revendication 3, **caractérisé en ce que** l'épaisseur de la paroi de la coque est sensiblement constante.

5. Vélo électrique selon une quelconque des revendications 1 à 4, **caractérisé en ce que** un de la pluralité de tubes du châssis est le tube diagonal, le tube diagonal comprenant une ouverture d'accès à une extrémité de ce dernier, notamment à l'arrière, l'ouverture étant agencée de sorte que la batterie d'entraînement puisse être retirée du tube diagonal par un chemin de retrait rectiligne.

6. Vélo électrique selon les revendications 1 et 3, **caractérisé en ce que** le ou les conduits de câbles sont définis par au moins une des protubérances en forme de nervures.

7. Vélo électrique selon la revendication 1 ou 6, **caractérisé en ce que** le conduit de câbles comprend une structure de logement prévue au niveau du manchon et un élément de conduit destiné à recevoir au moins deux câbles à insérer dans la structure de logement.

8. Vélo électrique selon la revendication 7, **caractérisé en ce que** l'élément de conduit est renfermé entre la surface extérieure du manchon et la surface intérieure du tube de châssis à l'état assemblé.

9. Vélo électrique selon la revendication 7 ou 8, **caractérisé en ce que** l'élément de conduit est entièrement ouvrable sur toute sa longueur pour l'insertion et le retrait des câbles.

10. Vélo électrique selon une quelconque des revendications 1 à 9, **caractérisé en ce que** le manchon est fixé au tube du châssis par un vissage, notamment que le manchon, est fixé au châssis de tube par un premier vissage dans une région arrière du manchon et par un deuxième vissage dans une région avant du manchon.

11. Vélo électrique selon une quelconque des revendications 1 à 10, **caractérisé en ce qu'**un dispositif de contact électrique est fixé à une extrémité du manchon.

12. Vélo électrique selon une quelconque des revendications 1 à 11, **caractérisé en ce qu'**un dispositif de verrouillage mécanique est fixé à une extrémité du manchon.

13. Vélo électrique selon les revendications 11 et 12, **caractérisé en ce que** le dispositif de contact électrique est fixé à une première extrémité du manchon et que le dispositif de verrouillage mécanique est fixé à une deuxième extrémité du manchon, opposée à la première extrémité.
